(19) Europäisches Patentamt
European Patent Office
Office européen des brevets

(11) Veröffentlichungsnummer: **0 237 464**
**B1**

(12) # EUROPÄISCHE PATENTSCHRIFT

(45) Veröffentlichungstag der Patentschrift: **13.06.90**

(51) Int. Cl.[5]: **B01D 53/34**, B01D 46/02

(21) Anmeldenummer: **87710001.6**

(22) Anmeldetag: **31.01.87**

(54) **Verfahren und Vorrichtung zur Entfernung von staub- und gasförmigen Schadstoffen aus Abgasen, insbesondere Abgasen bei der Lichtwellenleiter-Vorformherstellung.**

(30) Priorität: **05.02.86 DE 3603511**

(43) Veröffentlichungstag der Anmeldung: **16.09.87 Patentblatt 87/38**

(45) Bekanntmachung des Hinweises auf die Patenterteilung: **13.06.90 Patentblatt 90/24**

(84) Benannte Vertragsstaaten: **DE FR GB IT NL SE**

(56) Entgegenhaltungen:
**DE-A-2 849 498**
**DE-A-3 514 857**
**GB-A-2 146 261**

(73) Patentinhaber: **Standard Elektrik Lorenz Aktiengesellschaft, Lorenzstrasse 10, D-7000 Stuttgart 40(DE)**

(72) Erfinder: **Wahl, Rudolf, Dr., Kaltentaler Strasse 19, D-7000 Stuttgart 80(DE)**
Erfinder: **Walz, Erwin, Schönblickstrasse 107, D-7253 Renningen(DE)**

(74) Vertreter: **Kugler, Hermann, Dipl.-Phys. et al, Standard Elektrik Lorenz AG Patent- und Lizenzwesen Postfach 30 09 29, D-7000 Stuttgart 30(DE)**

**EP 0 237 464 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren nach dem Oberbegriff des Patentanspruchs 1 und eine entsprechende Vorrichtung. Ein derartiges Verfahren ist bekannt aus der DE-A1 3 429 956.

Bei diesem Verfahren wird zur Reinigung von Abgasen, die staub- und gasförmige Schadstoffe enthalten, zunächst in einer ersten Stufe eine Staubabscheidung und anschließend eine Absorption der gasförmigen Schadstoffe in nachfolgenden Wäscherstufen durchgeführt. Das Verfahren dient zur Reinigung der von kohlebeheizten Kesseln stammenden Abgase.

Versucht man, mit diesem Verfahren andere Abgase zu reinigen, deren staubförmige Schadstoffe eine äußerst feine Verteilung haben, wie z.B. die Stäube von $SiO_2$, $GeO_2$, $B_2O_3$, so entsteht das große Problem, daß es zu einer undefinierten Ausfällung von Feststoffen aus der Absorptionsflüssigkeit kommt und diese Feststoffe den oder die Gaswäscher verstopfen und dadurch wirkungslos machen. Dieses Problem besteht nicht nur bei den angegebenen staubförmigen Oxiden, sondern generell bei jeglichen feinverteilten Oxiden, die überwiegend bei der Hydrolyse von leichtflüchtigen Halogeniden anfallen, z.B. von Halogeniden der Elemente Si, Ge, B, Sn, Ti, V, W, P.

Solche fein verteilten Oxide als Schadstoffe neben gasförmigen Schadstoffen, wie z.B. Chlorgas, enthalten insbesondere die Abgase, die bei chemischen Dampfphasenreaktionen entstehen, die bei bekannten Verfahren zur Herstellung von Lichtwellenleiter-Vorformen angewendet werden. Anhand der Renigung der bei solchen chemischen Dampfphasenreaktionen entstehenden Abgase wird die Erfindung als Beispiel beschrieben.

Es ist die Aufgabe der Erfindung, ein Verfahren zur Reinigung von staub- und gasförmige Schadstoffe enthaltenden Abgasen anzugeben, das auch bei Stäuben mit äußerst feiner Verteilung zufriedenstellend arbeitet. Im weiteren soll auch eine Vorrichtung zur Durchführung des Verfahrens angegeben werden.

Die Aufgabe wird wie im Patentanspruch 1 angegeben gelöst. Weiterbildungen des erfindungsgemäßen Verfahrens sind den Unteransprüchen 2 bis 6 zu entnehmen. Die erfindungsgemäße Vorrichtung zur Durchführung des Verfahrens ist Gegenstand der Ansprüche 7 bis 9.

Die Erfindung wird nun anhand der einzigen Zeichnung beispielsweise näher erläutert. Die Zeichnung zeigt den schematischen Aufbau der gesamten Vorrichtung zur Reinigung der bei der Lichtwellenleiter-Vorform-Herstellung entstehenden Abgase. Bei der Herstellung von Lichtwellenleiter-Vorformen werden, wenn hierzu chemische Dampfphasenreaktionen durchgeführt werden (Eine Übersicht über verschiedene Herstellungsverfahren findet sich in "telcom-Report" 6(1983) Beiheft "Nachrichtenübertragung mit Licht", Seiten 29-35.), durch vollständig oder nur teilweise ablaufende chemische Reaktionen folgende Schadstoffe frei, die durch die Abluft der Herstellungsmaschine abtransportiert werden:

| Schadstoffe | Zustand |
|---|---|
| Chlorgas | gasförmig, feucht |
| Siliziumdioxid | staubförmig |
| Germaniumdioxid | staubförmig |
| Phosphorpentoxid | staubförmig |
| Bortrioxid | staubförmig |
| Salzsäure | gasnebelförmig |
| Siliziumtetrachlorid | dampfförmig |
| Germaniumtetrachlorid | dampfförmig |

Diese Schadstoffe werden in dem nachfolgend beschriebenen Verfahren derart zurückgehalten, daß die derzeit geltenden gesetzlichen Auflagen zur Reinhaltung der Luft und des Wassers voll erfüllt werden können.

Erfindungsgemäß wird zur Entfernung von feinverteiltem Staub aus dem Abgas ein trockenes Gewebefilter verwendet. Am linken Rand der Zeichnung ist solches trockenes Gewebefilter dargestellt und mit dem Bezugszeichen 1 bezeichnet. Das zu reinigende Abgas strömt aus einem Abgasrohr 2, angesaugt von einem Hochdruck-Ventilator 3 in das Filter 1 hinein. Das Filter 1 enthält eine Anordnung von parallelen Filterschläuchen 4 aus einem beschichteten Gewebe, die an ihrem oberen offenen Ende in eine Reinluftkammer 5 des Filters 1 münden. An der Außenseite der Filterschläuche scheidet sich der im Abgas enthaltende Staub ab, während das staubfreie Abgas über die Reinluftkammer 5 und einen Auslaßstutzen 6 des Filters 1 das Filter verläßt. Eine Besonderheit des Filters besteht darin, daß die Filterschläuche aus einem an der Außenseite beschichteten Gewebematerial, das auch als Membranfilter bezeichnet wird, bestehen. Vorzugsweise besteht die Beschichtung aus Polytetrafluorethylen (PTFE). Derartige Filterschläuche werden von der Firma W.L.Gore, 8011 Putzbrunn bei München, mit dem Warenzeichen GORE TEX angeboten.

Durch periodische Abreinigung der Filterschläuche mittels Druckluft wird in üblicher Weise dafür gesorgt, daß die anhaftenden Staubteilchen von den Filterschläuchen abfallen und in einer Staubkammer 7 gesammelt werden. Aus dieser Staubkammer werden die Staubteilchen von Zeit zu Zeit ausgetragen und in für die Weiterverarbeitung geeignete Behälter gefüllt.

In diesen Behältern kann der Staub durch Hinzugabe einer geeigneten Flüssigkeit eingedickt und neutralisiert werden, damit dieses Abfallmaterial staubfrei und umweltverträglich auf einer Deponie abgelagert werden kann. Enthält das Abfallmaterial eine solche Konzentration an dem wertvollen Rohstoff Germanium, so lohnt sich eventuell die Wiedergewinnung desselben durch geeignete Verfahren.

Die erfindungsgemäße Verwendung von beschichteten Gewebefiltern hat den Vorteil, daß sich die an der Außenseite der Filterschläuche abgeschiedenen Staubteilchen mit den bekannten mechanischen Verfahren leicht von der Gewebeoberfläche entfernen lassen, und den weiteren Vorteil, daß die Staubabscheidung in einem weiten Temperaturbereich unempfindlich gegenüber der Temperatur des zu reinigenden Abgases ist. Die obere Grenztemperatur beträgt 150° C.

Es sei betont, daß die bisher beschriebene Staubabscheidung von fein verteilten Stäuben aus Abgasen unabhängig von der nachfolgend zu beschreibenden Entfernung der gasförmigen Schadstoffe für jegliche Anwendungsfälle geeignet ist, bei denen das Problem besteht, feinverteilte Stäube aus Abgasen abzuscheiden.

Weitere Einzelheiten des Staubfilters bedürfen keiner näheren Erläuterung, da sie mit Ausnahme der verwendeten Filterschläuche bekannt sind, beispielsweise aus Prospekten der Firma MikroPuhl, 5000 Köln 90.

Zur weiteren Reinigung von den gas- und dampfförmigen Schadstoffen bläst der Hochdruckventilator 3 das aus dem Trockenfilter 1 austretende staubfreie Gas in einen Gaswäscher 8 mit nachfolgendem Tropfenabscheider 30.

Der Gaswäscher 8 ist vorzugsweise ein Kreuzstromwäscher oder ein Gegenstromwäscher bekannter handelsüblicher Bauart. In den Wäscher wird eine Absorptionsflüssigkeit aus einem Absorptionsflüssigkeitsbehälter 9 mittels einer Pumpe 10 hineingepumpt und dort von Sprühdüsen 11 in den zu reinigenden Abgasstrom versprüht. Bei den vorstehend aufgeführten gas- und dampfförmigen Schadstoffen wird als Absorptionsflüssigkeit, auch Waschflüssigkeit genannt, eine wässrige Natronlauge NaOH mit einem pH-Wert von mindestens 10 bis 12 verwendet. Im Wäscher erfolgt durch die eingesprühte Absorptionsflüssigkeit und durch den Kontakt mit den von der Absorptionsflüssigkeit benetzten Ober- flächen der Füllkörper eine intensive Vermischung des zu reinigenden Abgases mit der Absorptionsflüssigkeit, so daß es zu den folgenden chemischen Absorptionsreaktionen kommt:

$Cl_2 + 2NaOH \rightarrow NaCl + NaOCl$
$HCl + NaOH \rightarrow NaCl + H_2O$
$SiCl_4 + 2H_2O \rightarrow SiO_2 + 4HCl$
$GeCl_4 + 2H_2O \rightarrow GeO_2 + 4HCl$.

Dabei spielen die beiden letzteren Reaktionen quantitativ eine untergeordnete Rolle, da das bei der chemischen Dampfphasenreaktion nicht verbrauchte $SiCl_4$ zum größten Teil bereits auf dem Weg zum Wäscher mit der im Abgasstrom vorhandenen Feuchtigkeit umgesetzt wird und da $GeCl_4$ als Ausgangsstoff des Dotiermittels von vornherein nur in geringer Konzentration vorliegt. Wegen ihrer geringen Konzentration und wegen des hohen pH-Werts der Absorptionsflüssigkeit bleiben die Oxide $SiO_2$ und $GeO_2$ in der Absorptionsflüssigkeit gelöst, und es kommt zu keinen Ausfällungen von Feststoffen.

Die Absorptionsflüssigkeit, die infolge der vorstehenden Absorptionsreaktionen mit NaCl (Kochsalz) und mit NaOCl (Natriumhypochlorit oder Chlorbleichlauge) belastet ist, verläßt den Kreuzstromwäscher an einem an dessen Unterseite befindlichen Auslaß und läuft durch ein Magnetventil 12 hindurch und, solange dieses geöffnet ist, wieder in den Absorptionsflüssigkeitsbehälter 9 zurück. Auf diese Weise wird Absorptionsflüssigkeit kontinuierlich im Absorptionsflüssigkeitskreislauf umgepumpt. Ein weiteres Magnetventil 13, das sich in einer vom Auslaß des Wäschers zu einem zweiten Behälter 14 führenden Leitung befindet, ist so lange geschlossen, wie die Absorptionsflüssigkeit bei geöffneten Magnetventil 12 im Absorptionsflüssigkeitskreislauf umläuft.

Ein hinter dem Tropfenabscheider 30 angeordneter Hochdruckventilator sorgt dafür, daß das im Wäscher zu reinigende Abgas durch diesen und durch den nachgeordneten Tropfenabscheider hindurchströmt. Der Tropfenabscheider befreit das durchströmende Gas von mitgerissenen Absorptionsflüssigkeitstropfen. Die dabei abgeschiedene Flüssigkeit wird in die aus dem Wäscher austretende Flüssigkeit eingeleitet (nicht gezeigt).

Als Ergebnis der im Wäscher stattfindenden Absorption der Schadstoffe ist das von dem Hochdruckventilator 15 in die Atmosphäre geblasene Abgas so gut gereinigt, daß es einen Normalgehalt von 0,5 ppm $Cl_2$ und einen Maximalgehalt von 1,5 ppm $Cl_2$ hat, der deutlich unter dem höchstzulässigen Grenzwert liegt. Durch Einsatz eines größeren Gaswäschers kann der Rest-Chlorgehalt jederzeit noch weiter gesenkt werden (Erhöhung der Verweilzeit).

Der im Absorptionsflüssigkeitskreislauf notwendige hohe pH-Wert von mindestens 10 bis 12 wird von einer pH-Meß- und Regeleinrichtung 16 dauernd gemessen, die zur Konstanthaltung des pH-Wertes das verbrauchte NaOH durch dosierte Nachfüllung über eine gesteuerte Pumpe 17 aus einem NaOH-Tank 18 in den Absorptionsflüssigkeitsbehälter nachfüllt.

Wie bei jedem Gaswaschverfahren besteht auch bei dem vorstehend beschriebenen das Problem, daß die belastete Absorptionslösung entgiftet werden muß. Im Gegensatz zu dem Verfahren nach dem eingangs angegebenen Stand der Technik, bei dem vorgesehen ist, die belastete Absorptionsflüssigkeit abholen und in eigenen Prozessen entsorgen zu lassen, bei der also die Gaswäsche zur Entnahme der belasteten Absorptionslösung von Zeit zu Zeit unterorochen werden muß, geschieht die Entnahme der belasteten Absorptionsflüssigkeit, ihre Entgiftung und das Nachfüllen von unbelasteter Absorptionsflüssigkeit erfindungsgemäß wie folgt:

Eine Meß- und Steuereinrichtung 19 mißt andauernd die Belastung der im Absorptionsflüssigkeitskreislauf fließenden Absorptionsflüssigkeit und steuert bei Erreichen einer vorgebbaren Grenzbelastung die Magnetventile 12 und 13 so, daß das im Absorptionsflüssigkeitskreislauf befindliche Magnetventil 12 geschlossen und gleichzeitig das Magnetventil 13 geöffnet wird. Somit wird die den Gaswäscher verlassende Absorptionsflüssigkeit statt in den Absorptionsflüssigkeitsbehälter 9 nun in den Behälter 14 eingeleitet. Weiterhin pumpt die Pumpe 10 Absorptionsflüssigkeit aus dem Absorptionsflüssigkeitsbehälter 9 heraus und in den Wäscher hinein und von dort in den Behälter 14, so lange, bis die

Absorptionsflüssigkeit im Absorptionsflüssigkeitsbehälter 9 auf die Hälfte des Volumens abgenommen hat und ein darin befindlicher Schwimmer dann das Magnetventil 13 schließt und das Magnetventil 12 gleichzeitig wieder öffnet.

Damit ist ein Teil der belasteten Absorptionsflüssigkeit aus dem Absorptionsflüssigkeitskreislauf entnommen und in den Behälter 14 eingeleitet, in dem darauf die Entgiftung der belasteten Absorptionsflüssigkeit erfolgt. Während der Entnahme eines Teils der belasteten Absorptionsflüssigkeit aus dem Absorptionsflüssigkeitskreislauf wird in die im Absorptionsflüssigkeitsbehälter 9 vorhandene abnehmende Absorptionsflüssigkeit Wasser aus einem nicht gezeigten Wassertank eingeleitet, so daß dadurch die Belastung, d.h. die Konzentration von NaCl und NaOCl der für den weiteren Betrieb des Gaswäschers verwendeten Absorptionsflüssigkeit herabgesetzt wird. Währenddessen arbeitet die bereits beschriebene pH-Wert-abhängige dosierte Enleitung von NaOH in den Absorptionsflüssigkeitsbehälter 9 kontinuierlich weiter.

Zur Messung der Belastung der Absorptionsflüssigkeit gibt es verschiedene Möglichkeiten:
Die eine besteht darin, daß die Leitfähigkeit der Absorptionsflüssigkeit, die der Salzkonzentration direkt proportional ist berührungslos durch Anlegen eines elektrischen Wechselfeldes und Messung von dessen Dämpfung gemessen wird. Eine andere besteht darin, daß die Salzkonzentration in der Absorptionsflüssigkeit mittels Ionensensitiver Elektroden gemessen wird.

Ein wesentlicher Aspekt der Erfindung ist der, daß durch die Vorgabe einer Grenz-Belastung des Absorptionsmittels die Salzkonzentration des entnommenen Teils der Absorptionsflüssigkeit, auch Salzfracht genannt, und damit die Salzkonzentration der ins Abwasser geleiteten entgifteten Absorptionsflüssigkeit auf einen bestimmten Wert eingestellt wird. Würde man kontinuierlich eine bestimmte Volumenmenge pro Zeiteinheit entnehmen, so hätte die zu entgiftende Flüssigkeit eine unbestimmte Salzkonzentration.

Nachdem wie beschrieben ein Teil der Absorptionsflüssigkeit aus dem Absorptionsflüssigkeitskreislauf entnommen und in den Behälter 14 eingeleitet ist und daraufhin der Absorptionsflüssigkeitskreislauf durch den Absorptionsflüssigkeitsbehälter 9 hindurch wieder in Gang gesetzt ist, steht bis zur nächsten durch die Meß- und Steuereinrichtung 19 gesteuerte Entnahme von Absorptionsflüssigkeit genügend Zeit für die Entgiftung der im Behälter 14, Entgiftungsbehälter genannt, befindlichen belasteten Absorptionsflüssigkeit zur Verfügung.

Die Entgiftung geschieht wie folgt: Eine Umwälzpumpe 20 entnimmt in der Nähe des Bodens des Entgiftungsbehälters 14 laufend Flüssigkeit und pumpt sie oben wieder in den Behälter zurück. Ein Meßgerät 21 mißt fortlaufend das Redoxpotential der über die Pumpe 20 in einem "Entgiftungskreislauf" fließenden Flüssigkeit. Abhängigkeit von dem gemessenen Redoxpotential steuert eine Steuereinrichtung 31 eine Pumpe 29 so, daß sie so lange die Zugabe von Natriumhydrogenbisulfit $NaHSO_3$ (als Reduktionsmittel) aus einem Vorratsbehälter 26 in den Entgiftungsbehälter 14 zugibt, bis die allgemein bekannte Reduktionsreaktion

$$NaOCl+NaHSO_3+NaOH \rightarrow Na_2SO_4+NaCl+H_2O$$

vollständig abgelaufen ist, d. h. bis das Redoxpotential angibt, daß keine $OCl^-$-Ionen (Hypochlorit-Ionen) oder hypochlorige Säure mehr in der zu entgiftenden Flüssigkeit vorhanden sind.

Gleichzeitig wird durch die Steuereinrichtung 31 in Zusammenarbeit mit einem zweiten Meßgerät 22, das den pH-Wert der im Entgiftungskreislauf umlaufenden Flüssigkeit mißt, die Zugabe von NaOH derart geregelt, daß bei der Reduktionsreaktion entstehende Salz- und Schwefelsäure sofort neutralisiert wird, d. h. die Zugabe von NaOH wird so geregelt, daß der pH-Wert der Flüssigkeit nicht unter 7 abfällt.

Nach dem vollständigen Ablauf der Reduktionsreaktion wird die Zugabe von Natronlauge oder Salzsäure so geregelt, daß die Flüssigkeit endgültig neutralisiert wird, d. h. daß ein pH-Wert von 6,5 bis 7,5, der dem vorgeschriebenen Abwasser-pH-Wert entspricht, eingestellt wird. Wenn für eine hinreichend lange Zeit dieser vorgeschriebene pH-Wert gemessen worden ist, was bedeutet, daß die Lösung homogen ist, so wird ein Magnetventil 23 geöffnet, durch das der Inhalt des Entgiftungsbehälters, eine reduzierte und neutralisierte Flüssigkeit, in das Abwassernetz eingeleitet wird. Diese Flüssigkeit enthält die ungiftigen Salze NaCl (Kochsalz) und $Na_2SO_4$ (Glaubersalz) in einer weit unterhalb der Höchstzulässigkeitsgrenze liegenden Konzentration.

In der Zeichnung sind die Salzsäure-, Natronlauge- und Natriumbisulfit-Vorratsbehälter und die entsprechenden zur dosierten Zuführung steuerbaren Pumpen mit den Bezugszeichen 24 bis 26 bzw. 27 bis 29 bezeichnet. Statt Natriumhydrogensulfit $NaHSO_3$ läßt sich auch Ameisensäure HCOOH als Reduktionsmittel verwenden. Die Entgiftung geschieht wie folgt: Die Umwälzpumpe 20 entnimmt in der Nähe des Bodens des Entgiftungsbehälters 14 laufend Flüssigkeit und pumpt sie oben wieder in den Behälter zurück. Das Meßgerät 21 mißt fortlaufend das Redoxpotential der über die Pumpe 20 in einem "Entgiftungskreislauf" fließenden Flüssigkeit. Abhängig von dem gemessenen Redoxpotential steuert die Steuereinrichtung 31 die Pumpe 29 so, daß sie so lange Ameisensäure HCOOH aus einem Vorratsbehälter 26 in den Entgifungsbehälter 14 zugibt, bis die Reduktionsreaktion

$$NaOCl+HCOOH \rightarrow NaCl+CO_2+H_2O$$

vollständig abgelaufen ist, d. h. bis das Redoxpotential angibt, daß keine $OCl^-$-Ionen (Hypochlorit-Ionen) oder hypochlorige Säure mehr in der zu entgiftenden Flüssigkeit vorhanden sind.

Während dieser sogenannten Reduktionsphase mißt das zweite Meßgerät 22 den pH-Wert der im Entgiftungskreislauf umlaufenden Flüssigkeit, und die Steuereinrichtung 31 steuert abhängig vom gemessenen pH-Wert die Dosierung der durch die

Pumpe 29 zugegebenen Ameisensäure so, daß mit Hilfe der zugegebenen Ameisensäure der pH-Wert der Flüssigkeit auf einen Wert von etwa 5 gesenkt und auf diesem Wert gehalten wird, bis das Redoxpotential angibt, daß die Reduktionsreaktion vollständig abgelaufen ist.

Es hat sich gezeigt, daß bei diesem pH-Wert die Reduktion bis zu ihrem vollständigen Ablauf etwa 10 Minuten dauert. Bei höheren pH-Werten als 4 bis 7 würde die Reduktion eine etwas längere, jedoch auch noch zumutbare Zeit erfordern. Bei pH 11-12 geht die Reaktionsgeschwindigkeit gegen Null.

Es ist darauf hinzuweisen, daß Ameisensäure auch für andere Oxidchloride als Natriumhypochlorit ein geeignetes Reduktionsmittel ist. Auch Kalziumhypochlorit $Ca(OCl)_2$, das bei der Absorption von Chlor durch eine wässrige Kalziumhydroxid-Lösung $Ca(OH)_2$ (Kalkmilch) als Absorptionsflüssigkeit entsteht, kann in ähnlicher Weise wie Natriumhypochlrit durch Ameisensäure reduziert werden. Die Reduktionsreaktion lautet dann:

$$Ca(OCl)_2+2HCOOH \rightarrow CaCl_2+2CO_2+2H_2O.$$

An die oben beschriebene Reduktionsphase schließt sich die sogenannte Neutralisationsphase unmittelbar an, in der die in der Flüssigkeit vorhandene Salzsäure und restliche Kohlensäure (Bei dem pH-Wert 5 entweicht der überwiegende Teil des entstehenden Kohlendioxids $CO_2$ direkt.) durch Zugabe von Natronlauge NaOH oder einer anderen starken Lauge neutralisiert werden. Hierbei wird durch die aus dem Meßgerät 22 und der Steuereinrichtung 31 bestehende Regeleinrichtung der pH-Wert der Flüssigkeit durch Zugabe von NaOH oder HCl (letzteres für den Fall einer NaOH-überdosierung) so geregelt, daß die Flüssigkeit neutralisiert wird, d. h. daß ein pH-Wert von 6,5 bis 7,5, der dem vorgeschriebenen Abwasser-pH-Wert entspricht, eingestellt wird.

Wenn für eine hinreichend lange Zeit dieser vorgeschriebene pH-Wert gemessen worden ist, was bedeutet, daß die Löstung homogen ist, wird ein Magnetventil 23 geöffnet, durch das der Inhalt des Entgiftungsbehälters, eine reduzierte und neutralisierte Flüssigkeit, in das Abwassernetz eingeleitet wird.

Diese Flüssigkeit enthält die ungiftigen Salze NaCl (Kochsalz) und in geringeren Mengen Natriumhydrogenkarbonat $NaHCo_3$ und Natriumkarbonat $Na_2CO_3$, sowie in der Flüssigkeit gelöstes $CO_2$, das nach und nach entweicht. Die Konzentrationen der Salze in der Flüssigkeit liegen weit unter der Höchstzulässigkeitsgrenze für in das Abwassernetz gelangende Flüssigkeiten.

Die Verwendung von Ameisensäure hat gegenüber der Verwendung von Natriumhydrogensulfit den Vorteil, daß kein Natriumsulfat $Na_2SO_4$ produziert wird. Der Sulfatgehalt in der zur Einleitung ins Abwassernetz bestimmten Flüssigkeit ist problematisch, da in der Bundesrepublik Deutschland eine niedrige Sulfat-Grenzkonzentration von 400 mg/l eingehalten werden muß und eine Verdünnung durch Frischwasser nicht zulässig ist.

Das vorstehend beschriebene Verfahren und die dazugehörige Vorrichtung hat unabhängig davon, welches Reduktionsmittel verwendet wird, den wesentlichen Vorteil, daß die Salzkonzentration der in den Gaswäscher eingeleiteten Absorptionsflüssigkeit begrenzt wird, so daß eine die Wirksamkeit des Gaswäschers beeinträchtigende Salzausfällung im Gaswäscher ausgeschlossen ist. Die gesamte Vorrichtung arbeitet vollautomatisch und wartungsarm und benötigt keine größeren Mengen an Entgiftungschemikalien als durch die Stöchiometrie vorgegeben ist.

Abschließend ist noch darauf hinzuweisen, daß die oben beschriebene Verwendung von Ameisensäure zum Reduzieren von Salzen der hypochlorigen Säure unabhängig von dem Abgasreinigungsverfahren gemäß der vorliegenden Erfindung eine selbständige Bedeutung hat, da sie grundsätzlich dort einsetzbar ist, wo immer das Problem vorliegt, ein lösliches Salz der hypochlorigen Säure aus einer Flüssigket zu entfernen, damit die so entgiftete Flüssigkeit unbedenklich in das öffentliche Abwassernetz eingeleitet werden kann.

**Patentansprüche**

1. Verfahren zum Reinigen von staub-, gasförmige und/oder dampfförmige Schadstoffe enthaltenden Abgasen, bei dem in einer ersten Stufe eine Staubabscheidung erfolgt und in einer oder mehreren weiteren Stufen die gasförmigen Schadstoffe aus dem staubfreien Abgas mittels einer in einem Absorptionsflüssigkeitskreislauf fließenden Absorptionsflüssigkeit absorbiert werden, dadurch gekennzeichnet, daß zur Staubabscheidung ein trockenes beschichtetes Gewebefilter verwendet wird, daß die Belastung der Absorptionsflüssigkeit dauernd gemessen wird, daß bei Erreichen einer vorgebbaren Grenzbelastung ein Teil der Absorptionsflüssigkeit aus dem Absorptionsflüssigkeitskreislauf entnommen und in einem separaten Entgiftungsbehälter einer chemischen Entgiftungsbehandlung unterzogen und danach in das Abwassernetz geleitet wird und daß der entnommene Teil der Absorptionsflüssigkeit im Absorptionsflüssigkeitskreislauf durch neue, unbelastete Absorptionsflüssigkeit ersetzt wird.

2. Verfahren nach Anspruch 1, gekennzeichnet durch die Verwendung von Polytetrafluorethylenbeschichteten Gewebefiltern zur Staubabscheidung.

3. Verfahren nach Anspruch 1 oder 2, dadurch gekennzeichnet, daß die Belastung der Absorptionsflüssigkeit durch berührungslose Messung der Leitfähigkeit der Absorptionsflüssigkeit mittels Wechselstrominduktion oder durch Messung der Salzkonzentration der Absorptionsflüssigkeit mittels ionensensitiver Elektroden gemessen wird.

4. Verfahren nach einem der Ansprüche 1 bis 3, dadurch gekennzeichnet, daß mit einem Salz der hypochlorigen Säure belastete Absorptionsflüssigkeit bei der chemischen Entgiftungsbehandlung durch Redoxpotential-abhängig gesteuerte Zugabe von Natriumhydrogensulfit $NaHSO_3$ oder Natriumthiosulfat $Na_2S_2O_3$ als Reduktionsmittel und gleichzeitige pH-Wert-abhängig gesteuerte Zugabe von Natronlauge NaOH vollständig reduziert wird und daß nach vollständigem Ablauf dieser Reduktionsreaktion der vorgeschriebene Abwasser-pH-Wert durch Zugabe einer starken Säure oder einer starken Lauge eingestellt wird.

5. Verfahren nach einem der Ansprüche 1 bis 3, dadurch gekennzeichnet, daß mit einem Salz der hypochlorigen Säure belastete Absorptionsflüssigkeit bei der chemischen Entgiftungsbehandlung durch Redoxpotential-abhängig und pH-Wert-abhängig gesteuerte Zugabe von Ameisensäure HCOOH als Reduktionsmittel vollständig reduziert wird, wobei durch Dosierung der zugegebenen Ameisensäure der pH-Wert der Flüssigkeit auf einen vorgegebenen Wert aus dem Bereich von 4 bis 7, vorzugsweise auf den Wert 5, eingestellt und auf diesem Wert gehalten wird, und daß nach vollständigem Ablauf der Reduktionsreaktion der vorgeschriebene Abwasser-pH-Wert durch Zugabe einer starken Lauge eingestellt wird.

6. Verfahren nach einem der vorstehenden Ansprüche, dadurch gekennzeichnet, daß die Grenzbelastung der Absorptionsflüssigkeit so gewählt wird, daß die Salzkonzentration im entnommenen Teil der Absorptionsflüssigkeit und im Abwasser dadurch auf einen bestimmten Wert eingestellt wird.

7. Vorrichtung zur Durchführung des Verfahrens nach einem der Ansprüche 4 bis 6, mit einem Staubsammler, einem Gaswäscher (8), Mitteln (10, 12, 13) zum Aufrechterhalten des Absoprtionsflüssigkeits-Kreislaufs durch den Gaswäscher (8) und mit einem Entgiftungsbehälter (14), dadurch gekennzeichnet,
- daß der Staubsammler ein Staubfilter (1) mit Polytetrafluorethylen-beschichteten Gewebefiltern ist,
- daß sie Mittel (19, 12, 13, 16, 17, 18) enthält zum von der Belastung der Absorptionsflüssigkeit abhängigen automatischen Entnehmen von Absorptionsflüssigkeit aus dem Absorptionsflüssigkeits-Kreislauf, zum Einleiten in den Entgiftungsbehälter (14) und zum automatischen Nachfüllen von neuer Absorptionsflüssigkeit, und
- Mittel (20, 21, 22, 27, 28, 29) zum Aufrechterhalten eines Entgiftungs-Kreislaufs durch den Entgiftungsbehälter und zum automatisch dosierten Einleiten des Reduktionsmittels, der Natronlauge und der starken Säure aus Vorratsbehältern.

8. Vorrichtung nach Anspruch 7, ohne dessen Rückbeziehnung auf den Anspruch 5, dadurch gekennzeichnet, daß sie weiter enthält:
- eine Meß- und Steuereinrichtung (19), die die Belastung der im Absorptionsflüssigkeits-Kreislauf fließenden Absorptionsflüssigkeit dauernd mißt und die bei Erreichen der vorgegebenen Grenzbelastung das Entnehmen eines Teils der Absoprtionsflüssigkeit aus dem Absorptionsflüssgkeits-Kreislauf und Einleiten dieses Teils der Absoprtionsflüssigkeit in den Entgiftungsbehälter (14) steuert,
- eine Meß- und Steuereinrichtung 21, 31), die das Redoxpotential der im Entgiftungskreislauf fließenden Flüssigkeit dauernd mißt und bis zum Erreichen eines die vollständige Reduktion anzeigenden Wertes die Zugabe von Natriumhydrogensulfit $NaHSO_3$ oder Natriumthiosulfat $Na_2S_2O_3$ als Reduktionsmittel steuert,
- und eine Meß- und Steuereinrichtung (22, 31), die den pH-Wert der im Entgiftungskreislauf fließenden .Flüssigkeit dauernd mißt, die dosierte Zugabe von Natronlauge während der Reduktionsreaktion und nach Erreichen der vollständigen Reduktion die Zugabe der starken Lauge oder der starken Säure so steuert, daß die Flüssigkeit neutralisiert wird.

9. Vorrichtung nach Anspruch 7 ohne dessen Rückbeziehung auf den Anspruch 4, dadurch gekennzeichnet, daß sie weiter enthält:
- eine Meß- und Steuereinrichtung (19), die die Belastung der im Absorptionsflüssikeits-Kreislauf fließenden Absorptionsflüssigkeit dauernd mißt und eine Steuereinrichtung, die bei Erreichen der vorgegebenen Grenzbelastung das Entnehmen eines Teils der Absroptionsflüssigkeit aus dem Absorptionsflüssigkeits-Kreislauf und Einleiten dieses Teils der Absorptionsflüssigkeit in den Entgiftungsbehälter (14) steuert,
- eine Meß- und Steuereinrichtung (21, 31), die das Redoxpotential der im Entgiftungskreislauf fließenden Flüssigkeit dauernd mißt und bis zum Erreichen eines die vollständige Reduktion anzeigenden Wertes die Zugabe von Ameisensäure als Reduktionsmittel steuert,
- und eine Meß- und Steuereinrichtung (21, 31), die den pH-Wert der im Entgiftungskreislauf fließenden Flüssigkeit dauernd mißt, während der Reduktionsreaktion die dosierte Zugabe von Ameisensäure so steuert, daß ein vorgegebener pH-Wert eingestellt wird und nach Erreichen der vollständigen Reduktion die Zugabe der starken Lauge so steuert, daß die Flüssigkeit neutralisiert wird.

## Claims

1. Method for purifying waste gases containing pollutants in dust, gas, and/or vapor form wherein in a first step, dust is extracted, and wherein in one or more further steps, the gaseous pollutants are absorbed from the dust-free waste gas by means of an absorption liquid flowing in an absorption-liquid circulation system, characterized in that a dry, coated fabric filter is used for the dust extraction, that the pollutant concentration of the absorption liquid is measured continuously, that, when a predeterminable maximum permissible pollutant concentration is reached, part of the absorption-liquid is withdrawn from the absorption-liquid circulation system and is subjected to a chemical detoxication treatment in a separate detoxication tank and is then introduced into the sewage system, and that in the absorption-liquid circulation system, the withdrawn part of the absorption liquid is replaced by fresh, unpolluted absorption liquid.

2. A method as claimed in claim 1, characterized by the use of polytetrafluoroethylene-coated fabric filters for dust extraction.

3. A method as claimed in claim 1 or 2, characterized in that the pollutant concentration of the absorption liquid is determined by contactless measurement of the conductivity of the absorption liquid using an a.c. induction technique or by measuring the salt concentration of the absorption liquid by means of electrodes which are sensitive to ions.

4. A method as claimed in any one of claims 1 to 3, characterized in that during the chemical detoxication treatment, absorption liquid polluted with a salt of hypochlorous acid is completely reduced by redox-potential-dependent addition of sodium hydrogen sulphite ($NaHSO_3$) or sodium thiosulphate ($Na_2S_2O_3$) and by simultaneous pH-value-dependent addition of sodium hydroxide solution (NaOH), and that after the completion of this reduction process, the prescribed waste-water pH value is set by adding a strong acid or a strong base.

5. A method as claimed in any one of claims 1 to 3, characterized in that during the chemical detoxication treatment, absorption liquid polluted with a salt of hypochlorous acid is completely reduced by redox-potential-dependent and pH-value-dependent addition of formic acid (HCOOH) as a reductant, the pH value of the liquid being set to a predetermined value in the range of 4 to 7, preferably to the value 5, and held at this value, by measured introduction of the added formic acid, and that after the completion of the reduction process, the prescribed waste-water pH value is set by adding a strong base.

6. A method as claimed in any one of the preceding claims, characterized in that the pollutant concentration limit of the absorption liquid is chosen in such a manner that the salt concentration in the withdrawn part of the absorption liquid and in the waste water is thus preset to a given value.

7. Apparatus for carrying out the method as claimed in any one of claims 4 to 6, comprising a dust collector, a gas scrubber (8), means (10, 12, 13) for maintaining the absorption-liquid circulation system through the gas scrubber (8), and a detoxication tank (14), characterized in

– that the dust collector is a dust filter (1) with polytetrafluoroethylene-coated fabric filters,

– that the apparatus comprises means (19, 12, 13, 16, 17, 18) for automatically withdrawing absorption liquid from the absorption-liquid circulation system as a function of the pollutant concentration of the absorption liquid, for introducing said absorption liquid into the detoxication tank (14), and for automatically refilling the absorption-liquid circulation system with fresh absorption liquid, and

– that the apparatus comprises means (20, 21, 22, 27, 28, 29) for maintaining a detoxication circulation system through the detoxication tank and for automatically introducing the reductant, the sodium hydroxide solution, and the strong acid from storage vessels into the detoxication circulation system.

8. An apparatus as claimed in claim 7 without dependency on claim 5, characterized in that it further comprises:

– a measuring and control device (19) which continuously measures the pollutant concentration of the absorption liquid flowing in the absorption-liquid circulation system, and which controls the withdrawal of part of the absorption liquid from the absorption-liquid circulation system when the predetermined maximum permissible pollutant concentration is reached, and the introduction of that part of the absorption liquid into the detoxication tank (14),

– a measuring device (21) which continuously measures the redox potential of the liquid flowing in the detoxication circulation system and a controller (31) which controls the addition of sodium hydrogen sulphite ($NaHSO_3$) or sodium thiosulphate ($Na_2S_2O_3$) as the reductant until a value is reached which indicates that the reduction is completed, and

– a measuring device (223 which continuously measures the pH value of the liquid flowing in the detoxication circulation system and a controller (31) which controls the addition of sodium hydroxide solution during the reduction process and, after the reduction is completed, the addition of the strong base or the strong acid so that the liquid is neutralized.

9. An apparatus as claimed in claim 7 without dependency on claim 4, characterized in that it further comprises:

– a measuring and control device (19) which continuously measures the pollutant concentration of the absorption liquid flowing in the absorption-liquid circulation system, and which controls the withdrawal of part of the absorption-liquid from the absorption-liquid circulation system when the predetermined maximum permissible pollutant concentration is reached, and the introduction of that part of the absorption liquid into the detoxication tank (14),

– a measuring device (21) which continuously measures the redox potential of the liquid flowing in the detoxication circulation system and a controller (31) which controls the addition of formic acid as the reductant until a value is reached which indicates that the reduction is completed, and

– a measuring device (22) which continuously measures the pH value of the liquid flowing in the detoxication circulation system, and a controller (31) which controls the addition of formic acid during the reduction process in such a manner that a predetermined pH value is set, and, after the reduction is completed, controls the addition of the strong base in such a manner that the liquid is neutralized.

## Revendications

1. Procédé pour l'épuration de gaz effluents contenant des substances polluantes sous forme de poussières, de gaz et/ou de vapeurs, selon lequel, dans une première étape, une séparation des poussières est effectuée et, dans une ou plusieurs autres étapes, les substances nocives sous forme gazeuse sont absorbées à partir du gaz effluent exempt de poussières à l'aide d'un liquide d'absorption s'écoulant dans un circuit de liquide d'absorption, caractérisé en ce que pour la séparation des poussières, on utilise un filtre en tissu sec revêtu, en ce que la contamination du liquide d'absorption est mesurée en permanence, en ce que, lorsqu'une contamination limite prédéterminable est atteinte, une partie du liquide d'absorption est extraite du circuit de liquide d'absorption et est soumise, dans un récipient séparé de décontamination, à un traitement de décontamination chimique et est ensuite canalisée jusqu'au reseau d'égouts et en ce que la partie du liquide d'absorption qui a été extraite du circuit de liquide d'absorption est remplacée par du nouveau liquide d'absorption non contaminé.

2. Procédé selon la revendication 1, caractérisé

par l'utilisation de filtres en tissu revêtus de tetrafluoréthylène pour une séparation de poussières.

3. Procédé selon une des revendications 1 ou 2, caractérisé en ce que la contamination du liquide d'absorption est mesurée par une mesure sans contact de la conductivité du liquide d'absorption au moyen d'une induction en courant alternatif ou bien par mesure de la concentration en sel du liquide d'absorption au moyen d'électrodes sensibles à des ions.

4. Procédé selon une des revendications 1 à 3, caractérisé en ce que du liquide d'absorption contaminé par un sel d'acide hypochlorique est soumis, lors du traitement chimique de décontamination, à une réduction complète par une addition de lessive de soude NaOH, commandée en fonction du potentiel redox – qui dépend de l'addition commandée de sulfite hydrogéné de sodium $NaHSO_3$ ou de thiosulfate de sodium $Na_2S_2O_3$ comme agents réducteurs et simultanément de la valeur de pH –, et en ce que, après le déroulement complet de cette réaction de réduction, la valeur de pH, prescrite pour les eaux usées, est établie par addition d'un acide fort ou d'une lessive forte.

5. Procédé selon une des revendications 1 à 3, caractérisé en ce que du liquide d'absorption contaminé par un sel d'acide hypochlorique est soumis, lors du traitement chimique de décontamination, à une réduction complète par addition d'acide formique HCOOH servant d'agent de réduction, cette addition étant commandée en fonction du potentiel redox et de la valeur de pH, auquel cas, par dosage de l'acide formique ajouté, la valeur de pH du liquide est réglée à une valeur prédéterminée rentrant dans la plage comprise entre 4 et 7, normalement à la valeur 5 et est maintenue à cette valeur et en ce que, après déroulement complet de la réaction de réduction, la valeur de pH prescrite pour les eaux usées est réglée par addition d'une lessive forte.

6. Procédé selon une des revendications précédentes, caractérisé en ce que la contamination liquide du liquide d'absorption est choisie de telle sorte que la concentration en sels dans la partie extraite du liquide d'absorption et dans les eaux usées soit ainsi réglée à une valeur déterminée.

7. Installation pour la mise en œuvre du procédé selon une des revendications 4 à 6, comportant un collecteur de poussières, un laveur de gaz (8), des moyens (10, 12, 13) pour maintenir le circuit du liquide d'absorption par le laveur de gaz (8), ainsi qu'un récipient de décontamination (14), caractérisée en ce que:

– le collecteur de poussières est un filtre à poussières (1) comportant des éléments de filtrage en tissu revêtus de tetrafluoréthylène,

– elle contient des moyens (19, 12, 13, 16, 17, 18) pour extraire automatiquement du liquide d'absorption, en fonction de sa contamination, à partir du circuit de liquide d'absorption, pour l'introduire dans le récipient de décontamination (14) et pour effectuer automatiquement un complément de remplissage en nouveau liquide d'absorption, et

– des moyens (20, 21, 22, 27, 28, 29) pour, maintenir un circuit de décontamination par le récipient de décontamination et pour introduire, avec dosage automatique, l'agent de réduction, la lessive de scude et l'acide fort en provenance de réservoirs de stockage.

8. Installation selon la revendication 7, sans son rattachement à la revendication 5, caractérisée en ce qu'elle contient en outre:

– un dispositif de mesure et de commande (19), qui mesure en permanence la contamination du liquide d'absorption s'écoulant dans le circuit de liquide d'absorption et qui, lorsque la contamination limite prédéterminée est atteinte, commande l'extraction d'une partie du liquide d'absorption à partir du circuit de liquide d'absorption et l'introduction de cette partie de liquide d'absorption dans le récipient de décontamination (14),

– un dispositif de mesure et de commande (21, 31 ), qui mesure en permanence le potentiel redox du liquide s'écoulant dans le circuit de décontamination et qui commande, jusqu'à ce que soit atteinte une valeur indiquant la réduction complète, l'addition de sulfite hydrogéné de sodium $NaHSO_3$ ou de thiosulfate de sodium $Na_2S_2O_3$ comme agents de réduction,

– et un dispositif de mesure et de commande (22, 31), qui mesure en permanence la valeur de pH du liquide s'écoulant dans le circuit de décontamination et qui commande l'addition dosée de lessive de soude pendant la réaction de réduction et, après que la réduction complète a été effectuée, l'addition de lessive forte ou d'acide fort de telle sorte que le liquide soit neutralisé.

9. Installation selon la revendication 7, sans son rattachement à la revendication 4, caractérisée en ce qu'elle contient en outre:

– un dispositif de mesure et de commande (19), qui mesure en permanence la contamination du liquide d'absorption s'écoulant dans le circuit de liquide d'absorption et qui, lorsqu'une contamination limite prédéterminée est atteinte, commande l'extraction d'une partie de liquide d'absorption à partir du circuit de liquide d'absorption et l'introduction de cette partie du liquide d'absorption dans le récipient de décontamination (14),

– un dispositif de mesure et de commande (21, 31), qui mesure en permanence le potentiel redox du liquide s'écoulant dans le circuit de décontamination et qui commande, jusque à ce que soit atteinte une valeur indiquant la réduction complète, l'addition d'acide formique servant d'agent de réduction,

– et un dispositif de mesure et de commande (21, 31), qui mesure en permanence la valeur de pH du liquide s'écoulant dans le circuit de décontamination, qui commande, pendant la réaction de réduction, l'addition dosée d'acide formique de telle sorte qu'une valeur prédéterminée de pH soit réglée et qui, après que la réduction complète a été effectuée, commande l'addition de lessive forte de telle sorte que le liquide soit neutralisé.

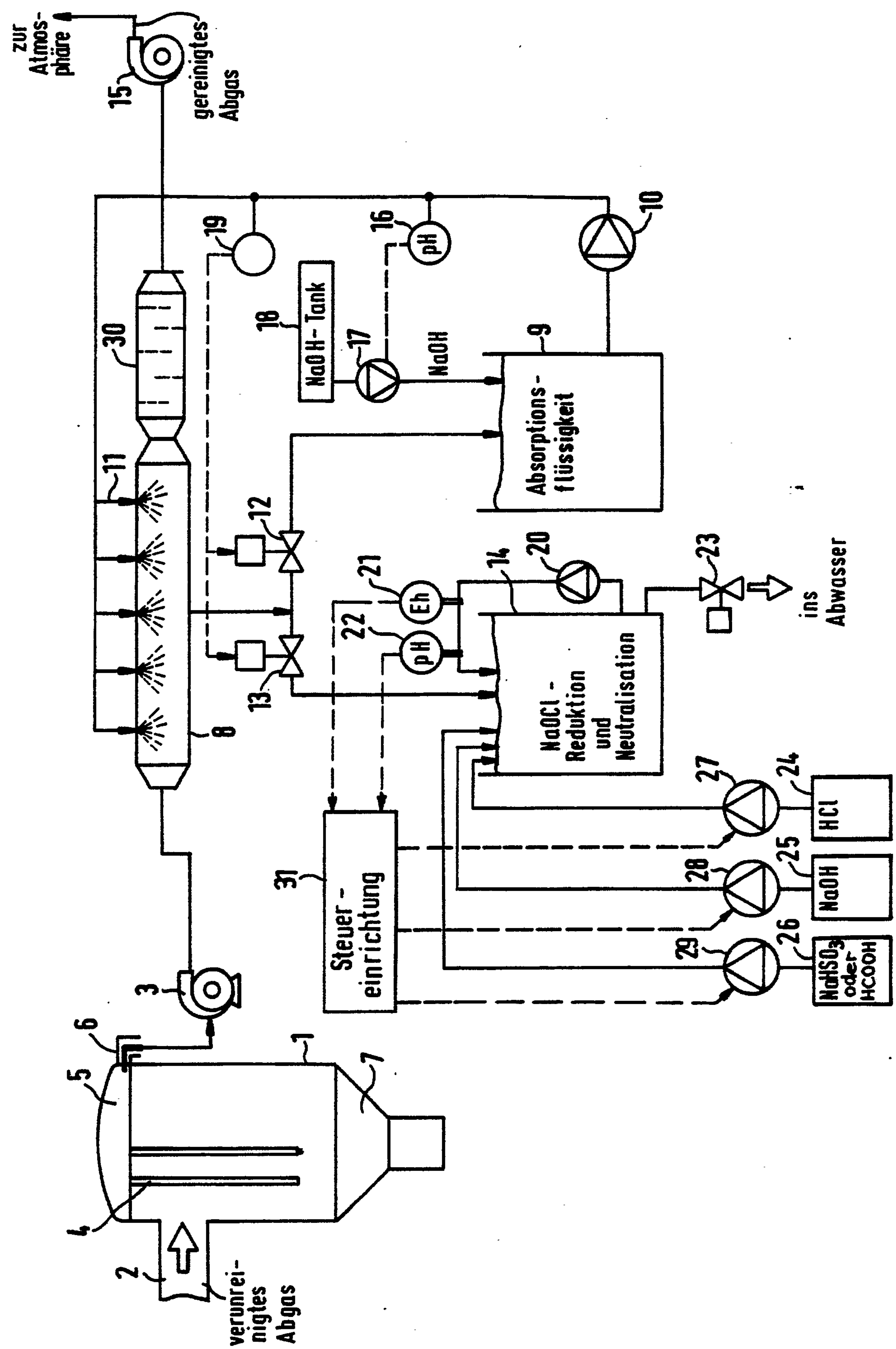
zur Atmos- phäre
15
gereinigtes Abgas
19
16
pH
10
18
NaOH-Tank
17
NaOH
9
Absorptions- flüssigkeit
30
11
12
21
Eh
20
14
23
ins Abwasser
22
pH
13
8
NaOCl - Reduktion und Neutralisation
27
24
HCl
31
Steuer - einrichtung
28
25
NaOH
29
26
NaHSO3 oder HCOOH
3
6
1
5
7
4
2
verunrei- nigtes Abgas